# FASCICULE DE BREVET EUROPEEN

(11) **EP 1 831 110 B1**
(45) Date de publication et mention de la délivrance du brevet: **09.12.2015**
(21) Numéro de dépôt: 05809319.6
(22) Date de dépôt: 18.10.2005
(51) Int. Cl.: H01M 4/131, H01M 4/136, H01M 4/62, H01M 10/0525, C01G 31/00, H01M 4/58, H01M 4/485

(54) **OXYDE DE LITHIUM ET DE VANDIUM LI(1+A)V3O8, 0<=A<=0.25, PROCEDE POUR SA PREPARATION**
LITHIUMVANADIUMOXIDLI1-V308(0,1 0,25 ) UND HERSTELLUNGSVERFAHREN DAFÜR
LITHIUM AND VANDIUM OXIDE Li1+ V3O8 (0,1 0,25) METHOD FOR THE PREPARATION THEREOF

(30) Priorité: 22.10.2004 FR 0411310
(43) Date de publication de la demande: 12.09.2007
(73) Titulaire: Blue Solutions, 29500 Ergué Gabéric (FR); Centre National de la Recherche Scientifique, 75016 Paris (FR)
(72) Inventeur: GAUBICHER, Joël, F-44000 NANTES (FR); MOREL, Benoit, F-16350 CHAMPAGNE MOUTON (FR); DUBARRY, Matthieu, Honolulu,96815, HI (US); GUYOMARD, Dominique, F-44880 SAUTRON (FR); DESCHAMPS, Marc, F-29000 QUIMPER (FR)
(74) Mandataire: Goulard, Sophie
(86) Numéro de dépôt international: PCT/FR2005/002580
(87) Numéro de publication internationale: WO 2006/045922

(56) Documents cités:
- WO-A-2004/024631
- XIE J ET AL: "Low-temperature sol-gel synthesis of Li1.2V3O8 from V2O5 gel" MATERIALS LETTERS, NORTH HOLLAND PUBLISHING COMPANY. AMSTERDAM, NL, vol. 57, no. 18, mai 2003 (2003-05), pages 2682-2687, XP004422318 ISSN: 0167-577X
- S. JOUANNEAU, A. LE GAL LA SALLE, A. VERBAERE, M. DESCHAMPS, S. LASCAUD, D. GUYOMARD: "Influence of the Morphology on the Li Insertion Properties of Li1.1V3O8" J. MATER.CHEM., vol. 13, 2003, pages 921-927, XP002332072 cité dans la demande

## Description

La présente invention concerne un procédé de préparation d'un oxyde de vanadium et de lithium, le composé obtenu, ainsi que son utilisation comme matière active d'une électrode positive.

Les batteries comprenant une électrode positive et une électrode négative séparée par un électrolyte comprenant un sel de lithium en solution dans un solvant sont largement connues. Le fonctionnement de ces batteries est assuré par la circulation réversible d'ions lithium dans l'électrolyte entre les électrodes. L'électrode positive est généralement constituée par un matériau composite comprenant une matière active, un liant, un matériau conférant une conduction électronique, et éventuellement un composé conférant une conduction ionique. Le composé conférant une conduction électronique peut être un noir de carbone qui ne catalyse pas l'oxydation de l'électrolyte à potentiel élevé.

Il est connu d'utiliser les oxydes de lithium et de vanadium Li_{1+α}V₃O₈ (0,1 < α ≤ 0,25) comme matière active d'électrode positive. Différents procédés de préparation de ces composés sont connus. La demande internationale WO2004/024631A décrit un procédé de fabrication d'une poudre cristalline d'oxyde mixte de lithium et de vanadium de formule Li₁₊ₓV₃O₈, x étant compris entre 0 et 0,2, comportant une étape de préparation d'une suspension aqueuse par mise en contact d'une pâte de NH₄VO₃ et d'une poudre de lithine monohydratée ; une étape de déshydratation en continu de ladite suspension dans un courant d'air chaud à une température comprise entre 200 et 600°C pour former une poudre sèche ; et une étape de calcination de ladite poudre sèche à une température comprise entre 380°C et 580°C.

Un procédé particulièrement intéressant consiste à préparer un gel précurseur de l'oxyde mixte, à sécher le gel puis à le soumettre à un traitement thermique. Ainsi S. Jouanneau, et al. [J. Mater. Chem., 2003, 13, 921-927] décrivent un procédé consistant à préparer un gel en ajoutant V₂O₅ à une solution aqueuse de LiOH.H₂O, à sécher le gel obtenu après un mûrissement sous agitation à 50°C pendant 24 heures, puis à soumettre le xérogel obtenu à un traitement thermique à 350°C ou à 650°C pendant 10 heures. L'inconvénient de ce procédé est qu'il met en oeuvre un traitement thermique sur une longue durée, l'énergie ainsi requise augmentant de façon significative le coût de production.

Xie et al.(Materials letters, 2003, 57, 18, 2682-2687) décrivent un procédé de fabrication d'une poudre cristalline d'oxyde mixte de lithium et de vanadium de formule Li₁₊ₓV₃O₈, x étant compris entre 0 et 0,2, comportant une étape de préparation d'un gel de formule Li_{1.2}V₃O₈ par mise en contact de V₂O₅ et de LiOH ; une étape de séchage du gel sous vide à 50°C ; et une étape de traitement thermique à une température comprise entre 150°C et 400°C.

Les présents inventeurs ont maintenant trouvé qu'un oxyde Li_{1+α}V₃O₈ ayant des propriétés au moins équivalentes à celles de l'oxyde de l'art antérieur ci-dessus, pouvait être obtenu par un procédé similaire, dans lequel le traitement thermique était effectué pendant une durée allant de quelques minutes à 1 heure.

Le but de la présente invention est de fournir un procédé simple et peu onéreux pour la préparation d'un oxyde Li_{1+α}V₃O₈ (0≤α≤0,25).

Le procédé selon la présente invention consiste à préparer un gel précurseur et à soumettre ledit gel à un traitement thermique. Il est caractérisé en ce que :
- le gel précurseur est préparé par mise en contact de V₂O₅-α et d'un précurseur de Li, en quantités telles que le rapport des concentrations [V₂O₅]/[Li] soit compris entre 1,15 et 1,5 ;
- le traitement thermique est effectué en deux étapes : une première étape à une température entre 80°C et 150°C pendant une durée de 3 heures à 15 jours ; une seconde étape à une température entre 250°C et 350°C, pendant une durée comprise entre 4 min et 1 heure, sous air ou sous atmosphère d'azote ou d'argon.

Dans un premier mode de réalisation, le précurseur de Li est LiOH, H₂O. V₂O₅-α et LiOH, H₂O sont introduits dans l'eau sous atmosphère d'azote, et le gel se forme en environ 15 h. Les concentrations en précurseurs peuvent varier entre 0,75 mol/l et 3 mol/l pour V₂O₅-α et entre 0,55 mol/l et 2,2 mol/l pour LiOH, H₂O.

Dans un second mode de réalisation, on ajoute au milieu réactionnel une solution aqueuse contenant de 10 à 50% en volume de peroxyde d'hydrogène. Le gel se forme alors en quelques minutes. Les concentrations limites utilisables sont de 0,05 mol/l à 2 mol/l pour V₂O₅-α, et de 0,04 mol/l à 1,5 mol/l pour le précurseur de Li.

Dans le second mode de réalisation :
- le précurseur de lithium peut être choisi parmi LiOH, H₂O, LiCl, LiNO₃, ou un sel de lithium d'un acide carboxylique, choisi par exemple parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium ;
- on met en contact V₂O₅-α avec une solution aqueuse de peroxyde, en présence d'un précurseur de lithium. Le début de formation du gel s'observe après quelques minutes. Le gel est complètement formé après un mûrissement de 15 min.
- les quantités respectives de précurseur de Li et de V₂O₅-α dans le milieu réactionnel sont de préférence telles que 0,08 mol.l⁻¹ < [Li] < 0,7 mol.l⁻¹ ; 0,1 mol.l⁻¹ < [V₂O₅] < 1 mol.l⁻¹. Des concentrations trop élevées en réactifs peuvent provoquer une effervescence, alors que des concentrations trop faibles donnent des précipités, et non pas des gels.

Le matériau obtenu par le procédé de l'invention est un oxyde Li_{1+α}V₃O₈ (0, 1≤ α ≤ 0,25 constitué par des agglomérats de petites aiguilles, lesdites aiguilles ayant une longueur L de 400 à 1000 nm, une largeur ℓ telle que 10<L/ℓ<100 et une épaisseur e telle que 10<L/e<100.

Un matériau selon la présente invention peut être utilisé pour l'élaboration d'une électrode composite positive pour une batterie au lithium.

Dans un mode de réalisation particulier, une électrode positive selon la présente invention est constituée par un matériau composite qui continent :
- un oxyde Li_{1+α}V₃O₈ obtenu par le procédé de la présente invention,
- un liant conférant une tenue mécanique,
- un composé conférant une conduction électronique,
- éventuellement un composé conférant une conductivité ionique.

La teneur en oxyde Li_{1+α}V₃O₈ est comprise de préférence entre 80 et 90 % en masse. La teneur en liant est de préférence inférieure à 10 % en masse. La teneur en composé conférant une conduction électronique est de préférence comprise entre 5 et 15% en masse. La teneur en composé conférant une conduction ionique est de préférence inférieure à 5 % en masse.

Le liant peut être constitué par un polymère non solvatant, par un polymère solvatant ou par un mélange de polymère solvatant et de polymère non solvatant. Il peut contenir en outre un ou plusieurs composés liquides polaires aprotiques. Le polymère non solvatant peut être choisi parmi les homopolymères et les copolymères de fluorure de vinylidène, les copolymères d'éthylène, de propylène et d'un diène, les homopolymères et les copolymères de tétrafluoro-éthylène, les homopolymères et les copolymères de N-vinylpyrrolidone, les homopolymères et les copolymères d'acrylo-nitrile et les homopolymères et les copolymères de méthacrylonitrile. Le poly(fluorure de vinylidène) est particulièrement préféré. Le polymère non solvatant peut porter des fonctions ioniques. A titre d'exemple d'un tel polymère, on peut citer les sels de polyperfluoroéther sulfonate, dont certains sont commercialisés sous la dénomination Nafion^{®}, et les sels de polystyrène sulfonate.

Le polymère solvatant peut être choisi par exemple parmi les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine ; et les réseaux obtenus par polycondensation et portant des groupements qui permettent l'incorporation de groupements réticulables.

Le composé polaire aprotique peut être choisi parmi les carbonates linéaires ou cycliques, les éthers linéaires ou cycliques, les esters linéaires ou cycliques, les sulfones linéaires ou cycliques, les sulfamides et les nitriles.

Le composé conférant une conduction électronique peut être choisi par exemple parmi les noirs de carbone, les graphites, les fibres de carbone, les nanofils de carbone, ou les nanotubes de carbone.

Le composé conférant une conduction ionique est un sel de lithium, choisi avantageusement parmi LiClO₄, LiPF₆, LiAsF₆, LiBF₄, LiR_{F}SO₃, LiCH₃SO₃, les bisperfluoroalkyl sulfonimidures de lithium, les bis- ou les trisperfluorosulfonyl-méthides de lithium.

Une électrode positive composite selon l'invention peut être élaborée en mélangeant l'oxyde Li_{1+α}V₃O₈, un liant dans un solvant approprié, un matériau conférant une conduction électronique, et éventuellement un sel de lithium, en épandant le mélange obtenu sur un disque métallique servant de collecteur (par exemple un disque d'aluminium), puis en évaporant le solvant à chaud sous atmosphère d'azote. Le solvant est choisi en fonction du liant utilisé. Une électrode positive peut en outre être élaborée par extrusion d'un mélange de ses constituants.

Une électrode ainsi constituée peut être utilisée dans une batterie comprenant une électrode positive et une électrode négative séparée par un électrolyte comprenant un sel de lithium en solution dans un solvant. Le fonctionnement d'une telle batterie est assuré par la circulation réversible d'ions lithium dans l'électrolyte entre les électrodes. L'un des objets de la présente invention est une batterie dans laquelle l'électrolyte comprend un sel de lithium en solution dans un solvant, caractérisée en ce qu'elle comprend une électrode positive contenant comme matière active l'oxyde Li_{1+α}V₃O₈ préparé selon le procédé de la présente invention. Lorsqu'une électrode positive contenant l'oxyde Li_{1+α}V₃O₈ tel qu'obtenu par le procédé de l'invention est monté dans une batterie, la batterie ainsi constituée se trouve à l'état chargé.

Dans une batterie selon l'invention, l'électrolyte comprend au moins un sel de lithium en solution dans un solvant. Comme exemple de sel, on peut citer LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe perfluoroalkyle ayant de 1 à 8 atomes de carbone ou un atome de fluor.

Le solvant de l'électrolyte peut être constitué par un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de di-éthyle et le carbonate de méthyle et d'éthyle. Une batterie ayant un électrolyte à solvant polaire aprotique fonctionne généralement dans un domaine de température de -20°C à 60°C.

Le solvant de l'électrolyte peut en outre être un polymère solvatant. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine tels que décrits dans FR-2 770 034 ; et les réseaux obtenus par polycondensation et portant des groupements qui permettent l'incorporation de groupements réticulables. On peut également citer les copolymères à blocs dans lesquels certains blocs portent des fonctions qui ont des propriétés rédox. Une batterie ayant un électrolyte à solvant polymère fonctionne généralement dans un domaine de température de 60°C à 120°C.

Le solvant de l'électrolyte peut en outre être un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire. Lorsque le solvant polymère de l'électrolyte porte des fonctions ioniques, le sel de lithium est facultatif.

Le solvant de l'électrolyte peut aussi être un mélange d'un composé polaire aprotique tel que défini ci-dessus ou d'un polymère solvatant tel que défini ci-dessus, et d'un polymère polaire non solvatant comprenant des unités contenant au moins un hétéroatome choisi parmi le soufre, l'oxygène, l'azote et le fluor. Un tel polymère non solvatant peut être choisi parmi les homopolymères et les copolymères d'acrylonitrile, les homopolymères et les copolymères de fluorovinylidène, et les homopolymères et les copolymères de N-vinylpyrrolidone. Le polymère non solvatant peut en outre être un polymère portant des substituants ioniques, et notamment un sel de polyperfluoroéther sulfonate (tel qu'un Nafion^{®} précité par exemple) ou un sel de polystyrène sulfonate.

Dans un autre mode de réalisation, l'électrolyte de la batterie de la présente invention peut être un solide conducteur inorganique, choisi parmi les composés désignés habituellement par Lisicon, c'est-à-dire des solutions solides Li₄XO₄-Li₃YO₄ (X = Si ou Ge ou Ti ; Y = P ou As ou V), Li₄XO₄-Li₂AO₄ (X = Si ou Ge ou Ti ; A = Mo ou S), Li₄XO₄-LiZO₂ (X = Si ou Ge ou Ti ; Z = Al ou Ga ou Cr), Li₄XO₄-Li₂BXO₄ (X = Si ou Ge ou Ti ; B = Ca ou Zn), LiO₂-GeO₂-P₂O₅, LiO₂-SiO₂-P₂O₅, LiO₂-B₂O₃-Li₂SO₄, LiF-Li₂S-P₂S₅, Li₂O-GeO₂-V₂O₅ ou LiO₂-P₂O₅-PON. Une batterie au lithium comprenant un tel électrolyte fonctionne dans un très large domaine de température, de l'ordre de -20°C à 100°C.

Bien entendu, l'électrolyte d'une batterie de la présente invention peut contenir en outre les additifs utilisés de manière classique dans ce type de matériau, et notamment un plastifiant, une charge, d'autres sels, etc.

L'électrode négative de la batterie peut être constituée par du lithium métallique ou un alliage de lithium qui peut être choisi parmi les alliages β-LiAl, γ-LiAl, Li-Pb (par exemple Li₇Pb₂), Li-Cd-Pb, Li-Sn, Li-Sn-Cd, Li-Sn dans différentes matrices, notamment des matrices oxygénées ou des matrices métalliques (par exemple Cu, Ni, Fe, Fe-C), Li-Al-Mn.

L'électrode négative de la batterie peut en outre être constituée par un matériau composite comprenant un liant et un matériau capable d'insérer de manière réversible des ions lithium à bas potentiel rédox (désigné ci-après par matériau d'insertion), ledit matériau composite étant lithié au cours d'une étape préliminaire. Le matériau d'insertion peut être choisi parmi les matériaux carbonés, naturels ou de synthèse. Ces matériaux carbonés peuvent être par exemple un coke de pétrole, un graphite, un whisker de graphite, une fibre de carbone, un méso carbone micro grains, (désigné usuellement par meso carbon micro bead), un coke de brai (désigné usuellement par pitch coke), un coke aiguille (désigné usuellement par needle coke). Le matériau d'insertion peut en outre être choisi parmi les oxydes tels que par exemple LiₓMoO₂, LiₓWO₂, LiₓFe₂O₃, Li₄Ti₅O₁₂, LiₓTiO₂ ou parmi les sulfures tels que par exemple Li₉Mo₆S₆ et LiTiS₂ ou parmi les oxysulfures. On peut également utiliser des composés permettant de stocker réversiblement le lithium à bas potentiel, tels que des vanadates amorphes (par exemple LiₓNiVO₄), les nitrures (par exemple Li_{2,6-x}Co_{0,4}N, Li₂₊ₓFeN₂, Li₇₊ₓMnN₄), les phosphures (par exemple Li₉₋ₓVP₄), les arséniures (par exemple Li₉₋ₓVAs₄) et les oxydes à décomposition réversible (par exemple CoO, CuO, Cu₂O). Le liant est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de polyvinylidène) est particulièrement préféré. Une électrode composite négative peut être élaborée en introduisant le composé carboné dans une solution du liant dans un solvant polaire aprotique, en épandant le mélange obtenu sur un disque de cuivre servant de collecteur, puis en évaporant le solvant à chaud sous atmosphère d'azote.

Une batterie selon l'invention comprenant un électrolyte solide peut se présenter sous la forme d'une succession de couches constituées respectivement par le matériau de l'électrode positive selon l'invention et son collecteur de courant, l'électrolyte solide, et l'électrode négative et éventuellement son collecteur de courant.

Une batterie selon l'invention comprenant un électrolyte liquide peut également se présenter sous forme d'une succession de couches constituées respectivement par le matériau de l'électrode positive selon l'invention et son collecteur de courant, un séparateur imbibé par l'électrolyte liquide, et le matériau constituant l'électrode négative et éventuellement son collecteur de courant.

La présente invention est illustrée plus en détail par les exemples donnés ci-après auxquels elle n'est cependant pas limitée.

### Exemple 1

On a préparé une solution aqueuse de précurseurs en ajoutant 6,8200 g (1,5 M) de V₂O₅-α et 1,2589 g (1,2 M) de LiOH,H₂O à 25 ml d'eau sous atmosphère d'azote. Un gel G s'est formé après une période de mûrissement de 15 heures. Ensuite, on a séché le gel pendant 15 jours à l'air à 90°C, puis on a soumis le xérogel ainsi obtenu à un traitement à 350°C pendant 4 min sous argon. Le produit obtenu est désigné ci-après par XG-4.

### Exemple 2

On a préparé d'autres échantillons selon le mode opératoire de l'exemple 1, en modifiant la durée de séchage (Ts) et/ou la durée de traitement thermique (Tt), comme indiqué dans le tableau 1 ci-dessous, dans lequel l'échantillon XG-4 de l'exemple 1 est rappelé pour mémoire.

| Ech. | XG-4 | XG-2 | XG-5 | XG-15a | XG-15b | XG-15c | XG-60 |
|---|---|---|---|---|---|---|---|
| Ts | 15 j | 15 j | 15 j | 15 j | 3 j | 12 j | 15 j |
| Tt min | 4 | 2 | 5 | 15 | 15 | 15 | 60 |

### Exemple 3

On a ajouté à 15 ml d'une solution aqueuse de peroxyde d'hydrogène à 30%, 1 g de V₂O₅, et 0,1689 g de LiOH. Un gel s'est formé en quelques minutes.

Le gel obtenu a été soumis à un séchage à 90°C pendant une nuit à l'air, puis à un traitement thermique de 15 min à 350°C sous argon.

### Exemple 4

On a préparé d'autres échantillons en reproduisant le mode opératoire de l'exemple 1, mais en effectuant la première étape du traitement thermique pendant une durée de 12 heures à 90°C à l'air, et pour différentes durées de traitement (Tt) à 350°C suivantes, en minutes : 1, 2, 3, 4, 5, 15, 30 et 45.

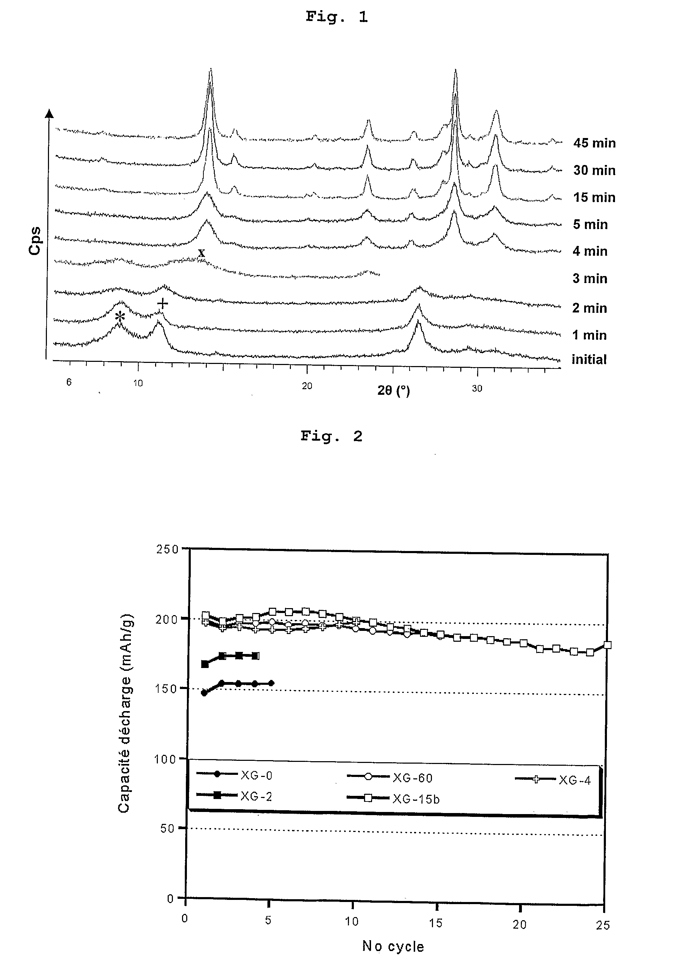

La figure 1 représente le diagramme de diffraction des rayons X pour les différents échantillons obtenus, ainsi que pour l'échantillon initial avant traitement thermique à 350°C. Il est ainsi confirmé qu'un traitement thermique de 4 min à 350°C est suffisant pour faire apparaître de manière claire le composé Li_{1+α}V₃O₈ de la présente invention dont la raie est marquée **x sur le diagramme.**

### Exemple 5

### Mesure des performances

Les performances électrochimiques de différents échantillons d'oxyde ont été testées en batterie swagelok de laboratoire du type : Li/ électrolyte liquide (EC+DMC+LiPF₆) / (XG + carbone), fonctionnant à température ambiante. Pour l'électrode positive, on a ajouté du noir de carbone à l'échantillon d'oxyde XG.

Une première série de mesures a été effectuée dans des conditions de cyclage correspondant à 2,5 Li par groupement formulaire par heure, d'une part avec les échantillons XG-2, XG-4, XG-15a, XG-15b et XG-60 selon l'invention, et d'autre part avec un échantillon XG-0. Cet échantillon XG-0 a été obtenu selon le procédé de l'exemple, sans le traitement thermique à 350°C.

Une seconde série de mesures a été effectuée dans des conditions de cyclage correspondant à 0,4 Li par groupement formulaire par heure, d'une part avec l'échantillon XG-15c, selon l'invention, et d'autre part avec un échantillon SG350. Cet échantillon SG350 a été obtenu dans les conditions de l'échantillon XG-15, mais avec un traitement thermique à 350°C de 10 h, précédé d'une montée en température à raison de 80°C/h.

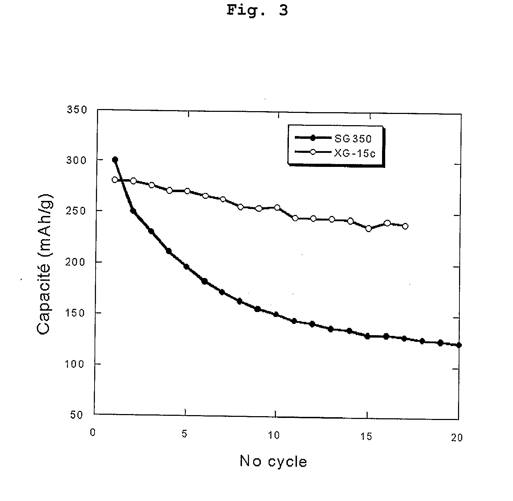

Les figures 2 et 3 représentent la variation de la capacité en fonction du nombre de cycles, respectivement pour la première série et pour la seconde série.

Il apparaît ainsi, de la figure 2, que pour une vitesse de cyclage de 2,5 Li par heure par unité formulaire, la durée de traitement thermique à 350°C peut être diminuée jusqu'à 4 min sans obtenir de perte significative de capacité lors des cycles successifs.

La figure 3 montre que, pour une vitesse de cyclage de 0,4 Li par heure par unité formulaire, le traitement thermique peut être diminué d'une dizaine d'heures à 15 min sans perte significative de capacité initiale, et avec une rétention de capacité au cours des cycles nettement améliorée.

## Revendications

1. Procédé pour la préparation d'un oxyde Li_{1+α}V₃O₈ (0 ≤ α ≤ 0,25) consistant à préparer un gel précurseur et à soumettre ledit gel à un traitement thermique, **caractérisé en ce que** :
- le gel précurseur est préparé par mise en contact de V₂O₅-α et d'un précurseur de Li, en quantités telles que le rapport des concentrations [V₂O₅]/[Li] soit compris entre 1,15 et 1,5 ;
- le traitement thermique est effectué en deux étapes : une première étape à une température entre 80°C et 150°C pendant une durée de 3 heures à 15 jours ; une seconde étape à une température entre 250°C et 350°C, pendant une durée comprise entre 4 min et 1 heure, sous air ou atmosphère d'azote ou d'argon.

2. Procédé selon la revendication 1, **caractérisé en ce que** le précurseur de Li est LiOH, H₂O, et **en ce que** V₂O₅-α et LiOH, H₂O sont introduits dans l'eau sous atmosphère d'azote.

3. Procédé selon la revendication 2, **caractérisé en ce que** les concentrations en précurseurs varient entre 0,75 mol/l et 3 mol/l pour V₂O₅-α et entre 0,55 mol/l et 2,2 mol/l pour LiOH, H₂O.

4. Procédé selon la revendication 1, **caractérisé en ce qu'**on ajoute au milieu réactionnel une solution aqueuse contenant de 10 à 50% en volume de peroxyde d'hydrogène.

5. Procédé selon la revendication 4, **caractérisé en ce que** les concentrations sont de 0,05 mol/l à 2 mol/l pour V₂O₅-α, et de 0,04 mol/l à 1,5 mol/l pour le précurseur de Li.

6. Procédé selon la revendication 4, **caractérisé en ce que** le précurseur de lithium est choisi parmi LiOH, H₂O, LiCl, LiNO₃, ou un sel de lithium d'un acide carboxylique.

7. Procédé selon la revendication 6, **caractérisé en ce que** le sel de lithium d'acide carboxylique est choisi parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium.

8. Procédé selon la revendication 4, **caractérisé en ce qu'**on on met en contact V₂O₅-α avec une solution aqueuse de peroxyde, en présence d'un précurseur de lithium.

9. Procédé selon la revendication 4, **caractérisé en ce que** les quantités respectives de précurseur de Li et de V₂O₅-α dans le milieu réactionnel sont telles que 0,08 mol.l⁻¹ < [Li] < 0,7 mol.l⁻¹ et 0,1 mol.l⁻¹ < [V₂O₅] < 1 mol.l⁻¹.

## Patentansprüche

1. Verfahren für die Herstellung eines Oxids Li_{1+α}V₃O₈ (0 ≤ α ≤ 0,25), das darin besteht, ein Vorläufergel herzustellen und das Gel einer thermischen Behandlung zu unterziehen, **dadurch gekennzeichnet, dass**:
- das Vorläufergel durch Inkontaktversetzen von V₂O₅-α und eines Li-Vorläufers in Mengen, dass das Konzentrationsverhältnis [V₂Os] / [Li] zwischen 1,15 und 1,5 inklusive beträgt, hergestellt wird,
- die thermische Behandlung in zwei Schritten durchgeführt wird: ein erster Schritt bei einer Temperatur zwischen 80 °C und 150 °C während einer Dauer von 3 Stunden bis 15 Tagen; ein zweiter Schritt bei einer Temperatur zwischen 250 °C und 350 °C während einer Dauer zwischen 4 Minuten und 1 Stunde inklusive in der Luft oder Stickstoff- oder Argonatmosphäre.

2. Verfahren nach Anspruch 1, **dadurch gekennzeichnet, dass** der Li-Vorläufer LiOH,H₂O ist und dass V₂O₅-α und LiOH,H₂O in Stickstoffatmosphäre in Wasser eingeführt werden.

3. Verfahren nach Anspruch 2, **dadurch gekennzeichnet, dass** die Vorläuferkonzentrationen zwischen 0,75 mol/l und 3 mol/l für V₂O₅-α und zwischen 0,55 mol/l und 2,2 mol/l für LiOH,H₂O schwanken.

4. Verfahren nach Anspruch 1, **dadurch gekennzeichnet, dass** dem Reaktionsmilieu eine wässrige Lösung hinzugefügt wird, die 10 bis 50 Vol.-% Wasserstoffperoxyd enthält.

5. Verfahren nach Anspruch 4, **dadurch gekennzeichnet, dass** die Konzentrationen von 0,05 mol/l bis 2 mol/l für V₂O₅-α und von 0,04 mol/l bis 1,5 mol/l für den Li-Vorläufer betragen.

6. Verfahren nach Anspruch 4, **dadurch gekennzeichnet, dass** der Lithiumvorläufer aus LiOH,H₂O, LiCl, LiNO₃ oder einem Lithiumsalz einer Carboxylsäure ausgewählt ist.

7. Verfahren nach Anspruch 6, **dadurch gekennzeichnet, dass** das Carboxylsäure-Lithiumsalz aus dem Lithiumacetylacetonat, dem Lithiumacetat, dem Lithiumstearat, dem Lithiumformiat, dem Litihiumoxalat, dem Lithiumcitrat, dem Lithiumlactat, dem Lithiumtartrat, dem Lithiumpyruvat ausgewählt ist.

8. Verfahren nach Anspruch 4, **dadurch gekennzeichnet, dass** V₂O₅-α mit einer wässrigen Peroxidlösung in Anwesenheit eines Lithiumvorläufers in Kontakt versetzt wird.

9. Verfahren nach Anspruch 4, **dadurch gekennzeichnet, dass** die jeweiligen Li- und V₂O₅-α--Vorläufermengen im Reaktionsmilieu 0,08 mol.l⁻¹ < [Li] < 0,7 mol.l⁻¹ und 0,1 mol.l⁻¹ < [V₂O₅] < 1 mol.l⁻¹ entsprechen.

## Claims

1. A process for the preparation of an oxide Li_{1+α}V₃O₈ (0 ≤ α ≤ 0.25) which consists in preparing a precursor gel and in subjecting said gel to a heat treatment, **characterized in that**:
- the precursor gel is prepared by bringing α-V₂O₅ and a Li precursor into contact in amounts such that the ratio of the [V₂O₅]/[Li] concentrations is between 1.15 and 1.5;
- the heat treatment is carried out in two stages: a first stage at a temperature of between 80°C and 150°C for a time of 3 hours to 15 days and a second stage at a temperature of between 250°C and 350°C for a time of between 4 min and 1 hour, under air or a nitrogen or argon atmosphere.

2. The process as claimed in claim 1, **characterized in that** the Li precursor is LiOH.H₂O and **in that** α-V₂O₅ and LiOH·H₂O are introduced into the water under a nitrogen atmosphere.

3. The process as claimed in claim 2, **characterized in that** the concentrations of precursors vary between 0.75 mol/l and 3 mol/l for α-V₂O₅ and between 0.55 mol/l and 2.2 mol/l for LiOH·H₂O.

4. The process as claimed in claim 1, **characterized in that** an aqueous solution comprising from 10 to 50% by volume of hydrogen peroxide is added to the reaction medium.

5. The process as claimed in claim 4, **characterized in that** the concentrations are from 0.05 mol/l to 2 mol/l for α-V₂O₅ and from 0.04 mol/l to 1.5 mol/l for the Li precursor.

6. The process as claimed in claim 4, **characterized in that** the lithium precursor is chosen from LiOH·H₂O, LiCl, LiNO₃ or a lithium salt of a carboxylic acid.

7. The process as claimed in claim 6, **characterized in that** the lithium salt of carboxylic acid is chosen from lithium acetylacetonate, lithium acetate, lithium stearate, lithium formate, lithium oxalate, lithium citrate, lithium lactate, lithium tartrate, lithium pyruvate.

8. The process as claimed in claim 4, **characterized in that** α-V₂O₅ is brought into contact with an aqueous peroxide solution in the presence of a lithium precursor.

9. The process as claimed in claim 4, **characterized in that** the respective amounts of Li precursor and of α-V₂O₅ in the reaction medium are such that 0.08 mol.l⁻¹ < [Li] < 0.7 mol.l⁻¹ and 0.1 mol.l⁻¹ < [V₂O₅] < 1 mol.l⁻¹.
